Europäisches Patentamt

(19) European Patent Office

Office européen des brevets

(11) Publication number: **0 276 167**
**A2**

(12) # EUROPEAN PATENT APPLICATION

(21) Application number: **88300536.5**

(51) Int. Cl.⁴: $G\ 06\ F\ 15/40$

(22) Date of filing: **22.01.88**

(30) Priority: **23.01.87 US 6492**

(43) Date of publication of application:
**27.07.88 Bulletin 88/30**

(84) Designated Contracting States:
**DE ES FR GB IT SE**

(71) Applicant: **Massey, James Hubert**
**1027 Oahu Box 7173 Diamond Head Country Club**
**Hot Springs National Park Arkansas 71913 (US)**

(72) Inventor: **Massey, James Hubert**
**1027 Oahu Box 7173 Diamond Head Country Club**
**Hot Springs National Park Arkansas 71913 (US)**

(74) Representative: **Funge, Harry et al**
**WILSON, GUNN & ELLIS 41-51 Royal Exchange Cross
Street**
**Manchester M2 7BD (GB)**

(54) **Apparatus and method for flexible data base access.**

(57) In order to access a data base system, a system user establishes communication with an interface unit (10) associated with the data base system (13,14) by means of telephone apparatus (11). Upon being connected with the data base system (13,14), the user is presented with a predetermined verbal message produced by a digitizing speech unit (22) responding to preestablished logic signal sequences. In response to this message, the user can select from a plurality of verbally presented options by an appropriate activity, such as depressing the appropriate key on the dialing apparatus of a touch-tone telephone apparatus (11). By providing a verbal response from the interface unit (10) that is determined by the user response to presented options, the system user can communicate with the interface unit (10), the verbal responses from the interface unit (10) representing an abbreviated menu for the system user. As a result of this communication, a system user can interrogate and retrieve data from a data base without data processing apparatus. The retrieved data can be provided to the user by speech digitizing procedure or can be transmitted to the system user by another procedure determined by the interaction between the data base system (13,14) and the system user. This type of interaction between the system and the system user can permit unsophisticated persons to access data bases without operator assistance and without the requirement of availability of data processing apparatus. When data processing apparatus is available, the user can access the system data bases by menu-driven interaction with interface unit (10) in a conventional manner.

FIGURE 1

**Description**

## BACKGROUND OF THE INVENTION

1. Field of the Invention

This invention relates generally to the acquistion of information stored of data bases and, more particularly, to the access and use of the data bases without requiring to complex and/or unfamiliar processing apparatus.

2. Description of the Related Art

Modern technology has permitted the establishment and the maintenance of large data bases stroring information related to a diverse number of subject matters. These large data bases can be up-dated and changed continually with minimum impact on the availability to the user community. However, the expense associated with these data bases has limited the nature of the information systems to areas where the user has the necessary data processing apparatus to access the data bases and is able to pay for the associated costs.

For example, several interactive systems are currently available to users who have previously established a (contractual relationship with the system, the users being able to couple to the system though data processing terminal apparatus and utilize services such as interrogation of transportation data bases. The cost to the user to engage in the interaction are typically determined by the length of time that the user is coupled to the system.

The system described above, while an effective technique for permitting the interaction with data bases, has several disadvantages. The foremost disadvantage is the requirement by the system user that a data processing system (and associated modem) be available to the user. While suitable systems are becoming more wide spread and more inexpensive, these systems are far from being generally available. Similarly, even when a suitable system is available, the user may not be comfortable with the interaction process. In addition, the requirement that a relationship be formed in advance between the user and the system limits the availability for many potential system users. Finally, certain types of information do not appear to be justified on such a system data base. For example, the maintenance of data relating to employment opportunities can acquire almost constant up-dating, while the use of such a service by a client may be so infrequent as to make the charges for coupling to the system prohibitively high.

A need has therefore been felt for apparatus and method for permitting a user to interact with a data base system that does not require a data processing system to be available to the potential user of the system.

FEATURES OF THE INVENTION

It is an object of the present invention to provide an improved system for the interaction of a user with centrally located data processing system.

It is a feature of the present invention to provide a technique to permit a user to interact with a data base by means of the telephone system.

It is yet another feature of the present invention to provide a data base system that can be accessed by both data processing apparatus and by a telephone receiver.

It is still another feature of the present invention to provide a technique whereby files of a data base system can be accessed by use of a telephone receiver.

It is a still further feature of the present invention to permit access to a data base system by means of a telephone receiver, wherein the interaction of the user and the data base system does not require operator intervention.

SUMMARY OF THE INVENTION

The aforementioned and other features, are accomplished according to the present invention, by providing a data processing system that permits interaction with a system user by means of telephone units. The data processing system provides the system user, by means of the telephone apparatus, with a verbal instruction to which the user can respond by an appropriate response. In the preferred embodiment, the appropriate response is selection of an appropriate key of a touch-tone telephone receiver. The interface unit of the data processing system, in response to the activation of a button on the touch-tone receiver, continues to provide verbal instruction until an end activity is defined by the sequence of instruction and responses. In particular, the end activity can be the retrieval of a requested unit (or units) of information from specified data base. The use of the verbal instructions from the data processing system and the use of the apparatus associated with the telephone receiver by the user minimizes the apparatus required for the interaction and reduces the level of sophistication required by the system user.

These an other features of the present invention will be understood by reading the following description along with the accompanying Figures.

BRIEF DESCRIPTION OF THE DRAWINGS

Figure 1 is a block diagram of a system for accessing data bases according to the present invention.

Figure 2 is a block diagram of the principal components of the interface unit of the data processing system.

Figure 3 is a block diagram of the interface unit indicating in principal subcomponents when a plurality of users can be coupled thereto and permitting users to interact with the data base system by data processing units or by a telephone receiver.

Figure 4 is a flow diagram illustrating the principal steps in the communication between the user and the data base system.

Figure 5 illustrates typical information that can be in a data base relating to real estate transactions.

Figure 6 is a flow diagram of a generalized interaction between the system user and the data processing system according to the present invention.

## DESCRIPTION OF THE PREFERRED EMBODIMENT

1. Detailed Description of the Figures

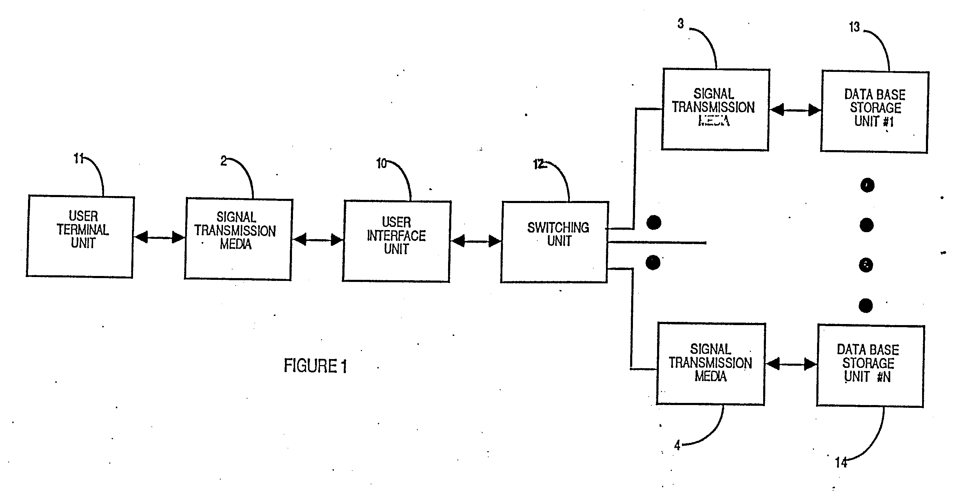

Referring now to Fig. 1, a block diagram of the data base access system of the present invention is show. The user of the system interacts via a telephone. In the preferred embodiment, the telephone is a touch-tone dial system. The telephone unit 11 can, in the alternative have appropriate apparatus associated therewith so that the sound generated by the touch-tone system can be simulated. In either implementation, the telephone unit operated by the system user exchanges signals with the user interface unit 10. The result of the exchange of signals between the telephone unit 11 and the user interface unit 10 is the control of switching unit 12. The switching unit 12 controls the access of the user to at least one of a plurality of data base storage units 13 through 14. The data base storage units 13 through 14 can be located in a single single memory unit.

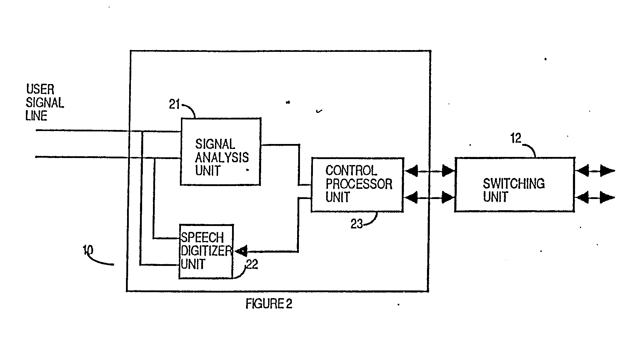

Referring next to Fig. 2, the principal components of the interface unit 10 of the data processing system according to the present invention is illustrated. The signal analyzer unit 21 receives signals from the user by means of the telephone wires. The signal analyzer unit 21 applies signals to the control processor unit 23. The control processor unit applies signals to the speech digitizer unit 22. In response to the signals applied to the speech digitizer unit 22, the speech digitizer unit applies signals to the telephone wires.

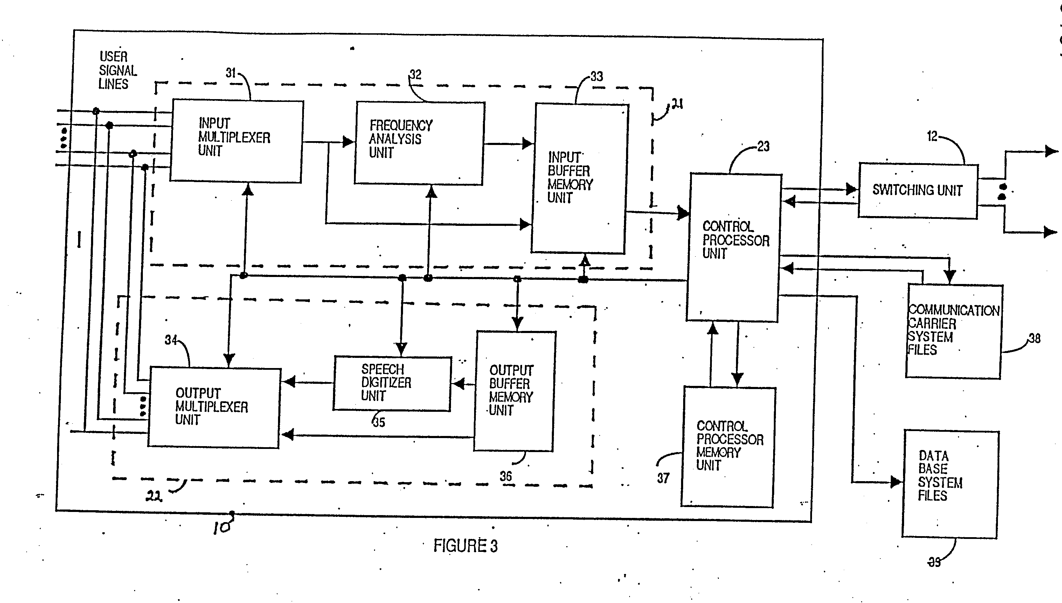

Referring next to Fig. 3, an interface unit capable of handling more complex user interactions in shown. A Plurality of communication lines are coupled to an input multiplexer unit 31. The input multiplexer unit 31 applies signals to frequency analyzing unit 32. The frequency analyzing unit 32 can identify the particular touch-tone key activated on a connected receiver and stores a data signal group identifying the activated touch-tone key to the input buffer memory unit 33. The frequency analyzing unit can also identify the signals indicating the connection of modem or other data processing apparatus to the communication lines. When the user interaction mechanism is identified as being data processing apparatus, the data signals are stored directly from the input multiplexer 331 into the input buffer memory unit. The data signal groups from the input buffer memory unit 33 are transferred to the control processor unit 23. This transfer is accomplished under the control of the control processor unit 23 which also controls the operation of the input multiplexer unit and the frequency analyzing unit 32. Associated with the control processor unit 23 is a cache memory unit 37. The cache memory unit 37 maintains the files associated with each user so that the control processor unit can correctly interpret each user data signal group unit in context. The control processor unit 23, based on the files in the cache memory unit 37 and on the user signal groups applies appropriate signal groups to the switching unit 12 to accomplish the user real goal. In particular, the switching unit will identify the correct data base and will accomplish the requested activity, e.g. to retrieve a file or group of files. In response to the requested activity, the accessed data base unit will return a plurality of data signal groups to the interface unit 10 via control processor 23. The control processor will then store the requested data signal groups in the output buffer memory unit 36. The signal groups from the output buffer memory unit 36 are applied to the speech digitizer unit 35, when the user access is through a telephone receiver, and then to an output multiplexer unit 34 or directly to the output multiplexer unit 34 when the user access mechanism is by means of a data processing network. The data signal groups are transferred from the output multiplexer unit 34 to the associated communications line. The control processor 23 can also access the communication carrier files 38 in response to certain predetermined conditions and can store information in system files 39 as required.

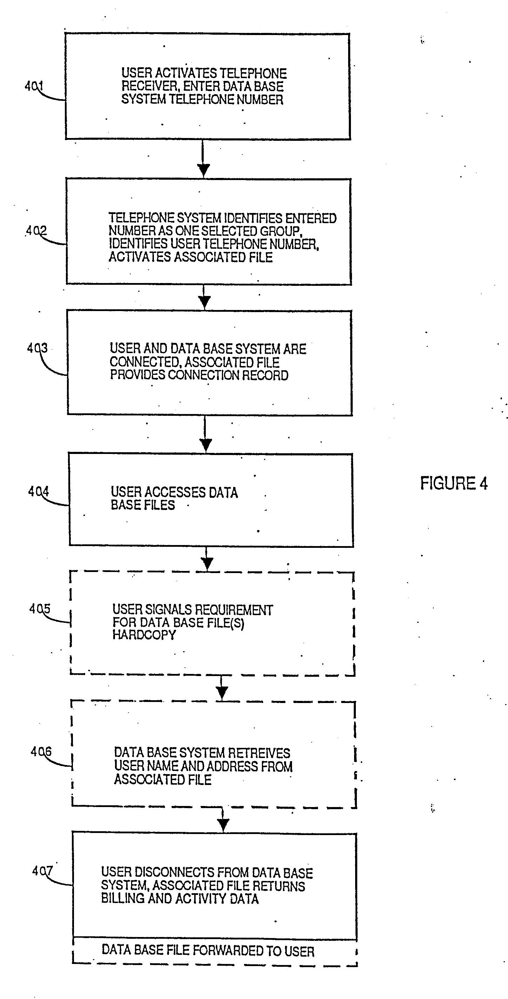

Referring next to Fig. 4, the steps involved in the interaction between the data base system and the user are illustrated. The user initiates the activity by activating the receiver and entering the key sequence identifying the to the communications system carrier the terminal location of the data base system or, at least the interface unit to the data base system in step 401. The key sequence identifies to the communication system carrier, in addition to the location of the interface on the system, that the location has specific type of service associated therewith. In particular, the key sequence indicates that the user is charged, not only for utilization of the communication system, but is charged for connection to the location indicated by the key sequence. This latter charge will be billed to the customer by the communication carrier, the collected charges transferred to the operator of the location identified by the receiver key sequence. Thus, in step 402, the communication carrier apparatus identifies that the key sequence is one of the selected group, identifies the user location to ensure that the type of interaction is permitted, and sets up a file that provides user location and data base location information, records the time of connection and can record other selected activity information. In step 403, when the correct conditions exist, the user receiver and the interface terminal are connected. During the connection, predetermined parameters, such as the length of the connection, are recorded for future use (e.g., customer billing and funds transfer to the data base operator). In the preferred embodiment, provision is made for transfer of a hard copy of selected data base files to the user location. (Because this activity is optional, the steps involved therein are designated by broken line boxes.) In step 404, the user communicates to the data base system that a printed copy of designated data base files are required. In response to the request by the user, the data base system establishes communication with the communication carrier and, in particularly, with the file associated with the user requesting the data base files. The specific information needed by the data base system is the postal address of the requesting user as indicated and this information is transferred to the data base system in step 405. In step 406, the user disconnects from the communication carrier system. The communication carrier system stores the file associated with this activity and, eventually uses the stored file material for billing and funds transfer activity.

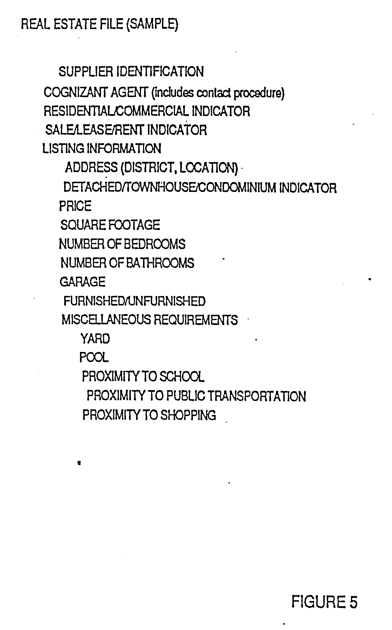

Referring next to Fig. 5, information that can be included in a data base relating to real estate transactions are shown. In the preferred embodiment, a plurality of data bases is contemplated including, in addition to a real estate data base, data bases relating to employment opportunities. The first set of information relates to then origin of the listing of the real estate data, i.e., the entity responsible for the listing and the agent through whom further negotiations should be held. The second set of data relates to some gross parameters such as whether the the property is residential or commercial and the type of contractual relationship required by the offerer. In addition, depending on the nature of the data base, the general location of the real estate desired by the user must be determined. This data organization provides a segregation of files into gross categories that are consistent periodic literature used by real estate agents. Once the gross category is identified, the remaining set of information is a description of the property. However, in addition to providing a summary description of the property for the data base system user, this data provides the basis for selecting a reasonable file subset for presentation to the user.

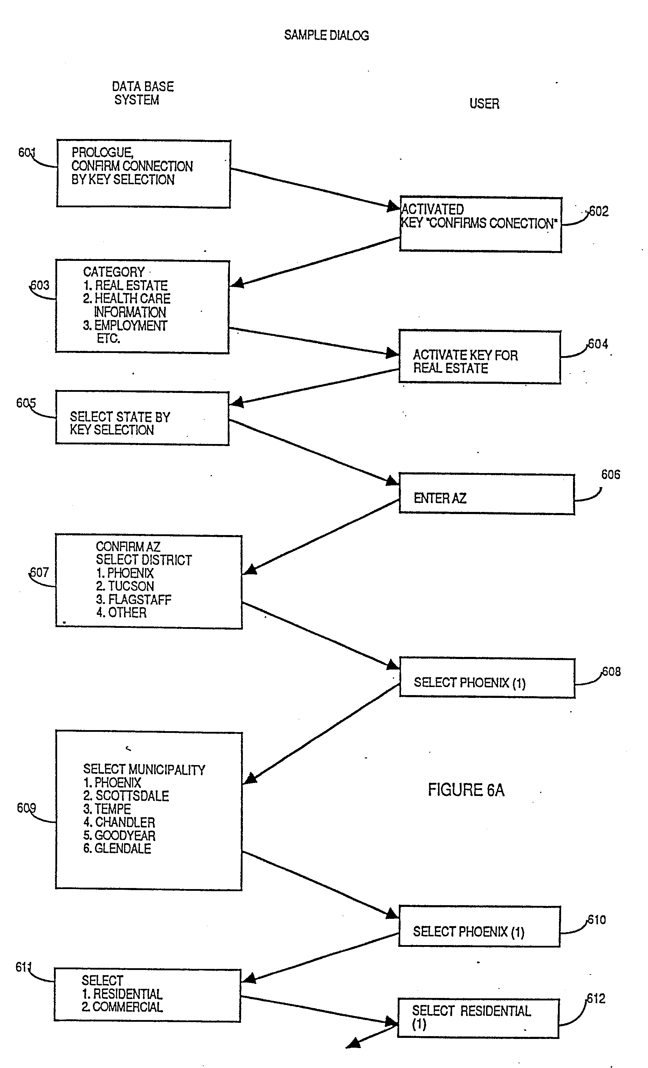

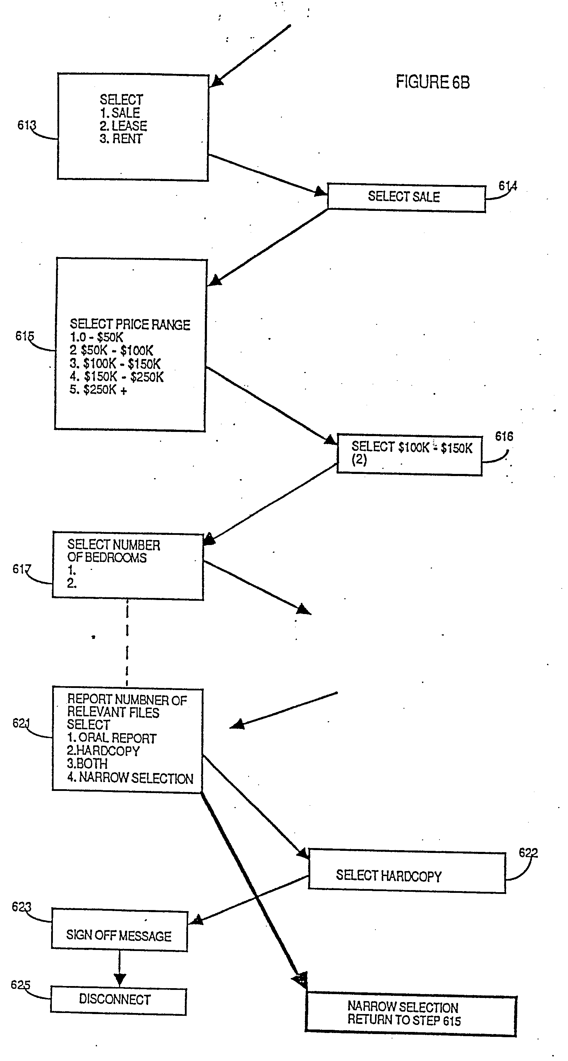

Referring next to Fig. 6, a sample dialog is illustrated indicating how a user can interrogate a data base through the use of a telephone receiver in response to procedure involving digitalized speech from the data base system. In step 601, an introductory message is provided to the user after connection to the system. The message informs the user of the system to which connection has been established, the nature of the system and the potential charges. At the end of the introductory message, the user is permitted to confirm that the he is connected to the system as intended in step 602. Otherwise the user is disconnected from the system. In step 603, the data base system relates which categories are available and permits the user, instep 604 to select the desired data base by appropriate key activation (e.g., real estate). Steps 605, 607 and 609 permit the user, by proper key activation in steps 606, 608 and 609, to narrow the data base to a particular region or district. It is clear that this narrowing can be extended by appropriate choice of data base system message and user response. Steps 611 and 613 allow the user to select, by appropriate key selection in steps 612 and 614, gross features of the desired transaction, i.e., purchase of a residential property. As a result of the message in step 615, the price range can be selected by the user in step 616. The messages is steps in steps 617 and following permit the user to identify by telephone key activation additional requirements. As a result of the user responses to the data base system messages, a relevant subset of the totality of files can be identified by the data base system. Upon identification, the user is informed by a message as to how many files meet the specified criteria. Because this number can be prohibitively large, the user is apprised as to the results of the search and the possible expense of the communication of all the files to the user. A message is provided the user which allows him to select the technique of communication or to invoke a procedure for further limiting the number of files in step 630. After the procedures communicating the contents of the files to the user are completed, the message concluding the connection of the user and data base system is provided and the user is disconnected from the system.

2. Operation of the Preferred embodiment

The present invention provides a technique for accessing a data base or selecting a path in a decision tree from a remote location by using only a telephone receiver or similar device. In the touch tone receiver, depressing a key on the receiver results in activation of a signal on the telephone lines. An interface unit is provided with apparatus that can identify which key was depressed. The interface unit, in response to the receiver activation, provides a predetermined responsive activity, typically in the form of an additional decision sequence from the user. This decision activity is continued until a sufficient narrowing of the data base files is accomplished. Then the interface unit provides a request instruction sequence to a data base unit by means of the switching unit. The data base unit returns the requested data files unless the quantity of files requested exceeds some predetermined criterion. When excessive information is required, the system alerts the user to the fact and permits the user to abort the operation. The apparatus disclosed in Fig. 1 and Fig. 2 will accomplish this type of responsive activity without operator assistance or intervention. It will be clear that operator assistance can be necessary for extraordinary events.

Of critical importance to the successful implementation of the data base system is that the query by the data base system be structured in such a manner to permit the user to grasp the implications of a response and to provide a response (by means of a telephone key board) with the minimum of opportunity for erroneous response. It will be clear that the dialog between the user and the data base system can have a plurality of decision points similar to the step 621 in Fig. 6 where the user can cause the data base system to branch to a procedure for narrowing the number of relevant data base files instead of communications the previously identified files. This type of branching procedure permits a good deal of flexibility in the ability to identify relevant files and the ability to alter the file identification procedure during the user data base system dialog.

The present data base system is intended to be accessed by a data processing system as well as through a telephone receiver or similar device. It is anticipated that, as the home use of data processing apparatus increases, the major access of the data base system will be through such a data processing system. The data processing system access to the data base system is more convenient because the menus and information can be transferred to the data processing system. This information transfer permits more elaborate menus, expediting the process of focusing on relevant data files. In additional the use of the data processing system in conjunction with the data base system permits browsing through files by a user and, because the data processing can store the transferred data, minimizes the requirement for a printed copy. However, the files and associated search procedures must accommodate both the data processing system access and the receiver access.

In addition to the capability of responding to both telephone receiver signals and data processing signals, the data base system must be capable of handling a multiplicity of user connections simultaneously. The system requirement of multiple user capability is addressed by multiplexer units and buffer memory units that permit the control processor unit 23 to sample the relatively slow communications from the telephone receiver units and respond in a manner that appears to be without continuity interruption to the user.

The foregoing description is included to illustrate the operation of the preferred embodiment and is not meant to limit the scope of the invention. The scope of the invention is to be limited by the following claims. From the foregoing description, many variations will be apparent to those skilled in the art that would yet be encompassed by the spirit and scope of the present invention.

**Claims**

1. A data processing system for interacting with system users through a telephone receiver comprising:

processing means for identifying which key of a telephone receiver has been activated for a telephone receiver connected to said data processing system, said processing means providing a signal group in response to said telephone key identification; and

audio means responsive to said signal group for applying digital signals to said telephone receiver, said digital signals interpreted by a system user as a speech sequence.

2. The data processing system of Claim 1 wherein said user selects a telephone receiver key to activate in response to said speech sequence.

3. The data processing system of Claim 2 wherein a plurality of said speech sequences and said responsive key activations identify at least one file in said data processing system.

4. The data processing system of Claim 3 wherein 2 said processing means further comprises:

a data base system for storing a multiplicity of information data groups; and

apparatus for interacting with said data base system coupled to said data processing system, said interaction resukting in a retrieval of at least information data group from data base system.

5. The data processing system of Claim 4 further comprising multiplexor means for interacting with a plurality of receivers simultaneously.

6. The data processing system of Claim 5 further comprising terminal processing means, said terminal processing means for interacting with signals from data processing terminals.

7. The data processing system of Claim 6 wherein said audio means includes a speech digitizing means responsive to said signal group for providing said digital signals.

8. A method for interacting with a data base system by a touch tone telephone receiver comprising the steps of:

providing said data base system with analysis apparatus for determining which key of said receiver is activated when said receiver and said data system are coupled for the exchange of signals;

equipping said data base system with speech apparatus for verbally communicating to said receiver a response determined by which of said receiver keys is actvated; and

storing a software program that verbally presents a choice to said receivers said verbally presented choice being determined a key activated in response to a previous verbally presented choice.

9. The method for interacting with a data base system of Claim 8 further comprising the step of identifying selected data groups stored in said data base system in response to a sequence of said choices and said key activation.

10. The method for interacting with a data base system of Claim 9 further including the step of communicating with a carrier system coupling said receiver and said data base system when an identification of said receiver is required by said data base system.

11. The method for interacting with a data base system of Claim 10 further comprising the step of providing a printed copy said identified selected data groups to an address associated with said receiver by activating a preselected receiver key in response to a preselected vebally presented choice.

12. The method for interacting with a data base system of Claim 11 further comprising the step of providing data processing apparatus in said data base system for exchanging signals with a data processing terminal, said exchanging of signals permitting said data processing terminal to identify selected signal groups in said data base system.

13. The method for interacting with a data base system of Claim 8 further including the step of exchanging signals with a plurality of telephone receivers.

14. A data processing system enabling a user with a telephone receiver capable of providing a key dependent signal to interact with said data processing system comprising:

input means for providing an associated signal in response to a plurality of said key dependent signals;

processing means for providing an audio signal group in response to each of said associated signals; and

output means for transmitting a verbal signal group to said receiver in response to said audio signal group, said verbal signal group interpreted as speech by said user when applied to said receiver.

15. The data processing system of Claim 14 wherein said verbal signal group supplies said user with at least one option, said at least one option being selected by said user by providing an appropriate key dependent signal.

16. The data processing system of Claim 15 further comprising a least one data base system, said data base system storing a plurality of information data groups, wherein a sequence of said user activated key dependent signals and said audio signal groups permit identification of information signal groups having predefined characteristics.

17. The data processing system of Claim 16 wherein said input and output means include multiplexing means for permitting said data processing system to interact with a plurality of receivers.

18. The data processing system of Claim 16 wherein said at least one data base system can be located at a site remote from a remainder of said data processing system.

19. The data processing system of Claim 17 further comprising terminal signal processing means for processing signals from at least one data processing terminal coupled to said input means.

FIGURE 1

0276167

FIGURE 2

0276167

USER SIGNAL LINES

INPUT MULTIPLEXER UNIT — 31

FREQUENCY ANALYSIS UNIT — 32

INPUT BUFFER MEMORY UNIT — 33

21

CONTROL PROCESSOR UNIT — 23

SWITCHING UNIT — 12

COMMUNICATION CARRIER SYSTEM FILES — 38

OUTPUT MULTIPLEXER UNIT — 34

SPEECH DIGITIZER UNIT — 35

OUTPUT BUFFER MEMORY UNIT — 36

CONTROL PROCESSOR MEMORY UNIT — 37

DATA BASE SYSTEM FILES — 39

22

10

FIGURE 3

0276167

```
            ┌─────────────────────────────┐
            │  USER ACTIVATES TELEPHONE   │
 401 ───────│  RECEIVER, ENTER DATA BASE  │
            │  SYSTEM TELEPHONE NUMBER    │
            └─────────────────────────────┘
                         │
                         ▼
            ┌─────────────────────────────┐
            │ TELEPHONE SYSTEM IDENTIFIES │
            │ ENTERED NUMBER AS ONE       │
 402 ───────│ SELECTED GROUP, IDENTIFIES  │
            │ USER TELEPHONE NUMBER,      │
            │ ACTIVATES ASSOCIATED FILE   │
            └─────────────────────────────┘
                         │
                         ▼
            ┌─────────────────────────────┐
            │ USER AND DATA BASE SYSTEM   │
 403 ───────│ ARE CONNECTED, ASSOCIATED   │
            │ FILE PROVIDES CONNECTION    │
            │ RECORD                      │
            └─────────────────────────────┘
                         │
                         ▼
            ┌─────────────────────────────┐
 404 ───────│ USER ACCESSES DATA          │
            │ BASE FILES                  │
            └─────────────────────────────┘
                         │
                         ▼
            ┌ ─ ─ ─ ─ ─ ─ ─ ─ ─ ─ ─ ─ ─ ┐
              USER SIGNALS REQUIREMENT
 405 ───────  FOR DATA BASE FILE(S)
              HARDCOPY
            └ ─ ─ ─ ─ ─ ─ ─ ─ ─ ─ ─ ─ ─ ┘
                         │
                         ▼
            ┌ ─ ─ ─ ─ ─ ─ ─ ─ ─ ─ ─ ─ ─ ┐
              DATA BASE SYSTEM RETREIVES
 406 ───────  USER NAME AND ADDRESS FROM
              ASSOCIATED FILE
            └ ─ ─ ─ ─ ─ ─ ─ ─ ─ ─ ─ ─ ─ ┘
                         │
                         ▼
            ┌─────────────────────────────┐
            │ USER DISCONNECTS FROM DATA  │
 407 ───────│ BASE SYSTEM, ASSOCIATED     │
            │ FILE RETURNS BILLING AND    │
            │ ACTIVITY DATA               │
            ├─────────────────────────────┤
            │ DATA BASE FILE FORWARDED    │
            │ TO USER                     │
            └ ─ ─ ─ ─ ─ ─ ─ ─ ─ ─ ─ ─ ─ ┘
```

FIGURE 4

0276167

REAL ESTATE FILE (SAMPLE)

    SUPPLIER IDENTIFICATION
   COGNIZANT AGENT (includes contact procedure)
   RESIDENTIAL/COMMERCIAL INDICATOR
    SALE/LEASE/RENT INDICATOR
   LISTING INFORMATION
      ADDRESS (DISTRICT, LOCATION)
     DETACHED/TOWNHOUSE/CONDOMINIUM INDICATOR
     PRICE
     SQUARE FOOTAGE
     NUMBER OF BEDROOMS
     NUMBER OF BATHROOMS
     GARAGE
     FURNISHED/UNFURNISHED
     MISCELLANEOUS REQUIREMENTS
       YARD
       POOL
       PROXIMITY TO SCHOOL
        PROXIMITY TO PUBLIC TRANSPORTATION
       PROXIMITY TO SHOPPING

FIGURE 5

0276167

SAMPLE DIALOG

DATA BASE
SYSTEM

USER

601 PROLOGUE,
CONFIRM CONNECTION
BY KEY SELECTION

ACTIVATED
KEY "CONFIRMS CONECTION" 602

603 CATEGORY
1. REAL ESTATE
2. HEALTH CARE
   INFORMATION
3. EMPLOYMENT
   ETC.

ACTIVATE KEY FOR
REAL ESTATE 604

605 SELECT STATE BY
KEY SELECTION

ENTER AZ 606

607 CONFIRM AZ
SELECT DISTRICT
1. PHOENIX
2. TUCSON
3. FLAGSTAFF
4. OTHER

SELECT PHOENIX (1) 608

609 SELECT MUNICIPALITY
1. PHOENIX
2. SCOTTSDALE
3. TEMPE
4. CHANDLER
5. GOODYEAR
6. GLENDALE

FIGURE 6A

SELECT PHOENIX (1) 610

611 SELECT
1. RESIDENTIAL
2. COMMERCIAL

SELECT RESIDENTIAL
(1) 612

0276167

FIGURE 6B

613

SELECT
1. SALE
2. LEASE
3. RENT

SELECT SALE    614

615

SELECT PRICE RANGE
1. 0 - $50K
2 $50K - $100K
3. $100K - $150K
4. $150K - $250K
5. $250K +

SELECT $100K - $150K    616
(2)

617

SELECT NUMBER
OF BEDROOMS
1.
2.

621

REPORT NUMBNER OF
RELEVANT FILES
SELECT
1. ORAL REPORT
2. HARDCOPY
3. BOTH
4. NARROW SELECTION

SELECT HARDCOPY    622

623

SIGN OFF MESSAGE

625

DISCONNECT

NARROW SELECTION
RETURN TO STEP 615